# EUROPEAN PATENT APPLICATION

(11) **EP 4 648 222 A1**
(43) Date of publication of application: **12.11.2025**
(21) Application number: 24174480.4
(22) Date of filing: 07.05.2024
(51) Int. Cl.: H01Q 1/32, H01Q 1/42, G01S 13/931, G01S 7/02, H01Q 17/00

(54) **PERFORMANCE OPTIMIZED RADOME ABSORBER ATTACHEMENT FOR RADAR RCS REDUCTION**

(71) Applicant: Aptiv Technologies AG, 8200 Schaffhausen (CH)
(72) Inventor: TALAI, Armin, 8200 Schaffhausen (CH); LEONARDI, Roberto, 8200 Schaffhausen (CH)
(74) Representative: Bardehle Pagenberg Partnerschaft mbB Patentanwälte Rechtsanwälte

(57) **Abstract**

A radar device comprising at least one antenna having a field of view; a radome, covering the at least one antenna, wherein the radome comprises a first layer and a second layer in form of a layer stack, configured to have a low reflection for radar waves.

## Description

### 1. Field of the invention

This invention relates to a radar device and a vehicle comprising a radar device and other radome adaptions in radar technology, in which the radome is optimized to reduce the radars cross section by integrating an absorber layer into the radome structure.

### 2. Background

The recent developments in the automotive industry led to the rise of advanced driver assistance systems (ADAS), where radar devices are an important component to be integrated into vehicle systems for adaptive cruise control, collision avoidance, and/or blind-spot detection. Such radar devices are typically equipped with either a single radar antenna or multiple antennas forming an antenna array. A radome is often used to mechanically shield these antennas. This protective layer is generally made from injection-molded plastic and is positioned in front of the antennas to safeguard them against environmental elements such as dust and moisture.

Usually, the radar devices are arranged behind a fascia, i.e., the front-end components of a car, such as the front bumper or grille. This leads to the problem of so-called multibounce reflections from the fascia contributing to angular errors and "ghost" targets, e.g. from bridges, when a car drives underneath a bridge. Additionally, the integration behind a fascia for wide field of view radar devices requires to reduce reflectivity of the radar devices front face. It is thus necessary, to decrease the radar cross section of the radar devices.

Conventionally, to address these challenges radar devices can for example comprise diffraction cross gratings or absorber materials directly applied onto the antenna surfaces, which is costly, as the radar surface needs an additional treatment compared to radars without cross gratings or absorber materials.

It is disadvantageously here, that the reflectivity still remains relatively high, and also the multibounce reflections cannot be significantly reduced. With the conventional radar devices, the angle error and the phenomenon of elevation side lobes also still remains. This leads to strict integration guidelines when implementing a radar device behind a fascia, as conventionally, the fascia has a huge impact on the radar device performance.

In view of the foregoing, there is a need for improved radar devices. It is thus an object of the present invention to overcome some or all the deficiencies of the state of the art. It is in particular an object to provide radar devices that have a decreased radar cross section and an optimized radome which includes an absorbing layer.

### 3. Summary

The above objects are at least partially achieved by the subject matter of independent claim 1. Preferred embodiments are the subject of the dependent claims, and the skilled person will find clues to other suitable aspects of the present invention in the overall disclosure of the present application.

An aspect of the invention relates to a radar device comprising at least one antenna having a field of view and a radome, covering the at least one antenna, wherein the radome comprises a first layer and a second layer in form of a layer stack, configured to have a low reflection for radar waves. In other words, the two layers are in surface contact (with optionally one or more bonding layer(s) in between, like e.g., a gluing layer or similar) and the so-formed layer stack has a low reflection for radar waves.

In one preferred embodiment, this invention could be used in various applications such as in automotive vehicles or in aircraft for collision avoidance systems, for navigation and/or obstacle detection. The dual-layer radome enhances the radar device's performance by ensuring that radar waves are transmitted and received with minimal interference from reflection. This could significantly improve the accuracy and reliability of the radar device, offering advantages like enhanced safety in automotive applications and improved navigational aids. The design choice of a two-layer radome aims to reduce the radars cross section and also reduces the phenomena of elevation multibounce. This phenomenon can lead to inaccuracies in the radar's perception of objects' locations and distances, potentially compromising the radar's effectiveness in applications like vehicle collision avoidance systems, autonomous navigation, and precise mapping or similar. The invention's adaptability to every radar type by merely exchanging the radome presents a significant advancement in vehicle integration and radar technology application. This flexibility means that such a radome can be universally applied across various radar systems, thus improving vehicle integration.

A further aspect of the invention relates to a radar device, wherein the first layer forms a radome layer and the second layer forms an absorber layer from a material with a higher radar wave absorption capacity than the material of the first layer, wherein the absorber layer is arranged between the radome layer and the at least one antenna.

This arrangement allows for enhanced performance of the radar system, particularly in environments where minimizing interference and maximizing signal clarity are critical. For example, in automotive radar systems used for adaptive cruise control and/or emergency braking, the absorber layer can significantly reduce the amount of radar signal bounce-back from the radome itself and/or from a front fascia behind which the radar device is installed, leading to more accurate detection of obstacles, vehicles, and/or pedestrians ahead. The introduction of an absorber layer specifically engineered to have a higher absorption capacity for radar waves demonstrates an approach to refining radar technology for improved safety, efficiency, and reliability across various applications.

The invention can further be improved in way that the second layer is arranged outside of the field of view of the at least one antenna. In other words, the second layer is preferably arranged around the field of view of the antenna.

Such a configuration could be particularly advantageous in applications where the precision and directionality of radar waves are crucial. Placing the absorber layer outside the antenna's field of view ensures that the radar can accurately capture the necessary data without interference from its own components. By carefully positioning the absorber layer to avoid the antenna's field of view, the invention optimizes the radar device's functionality, balancing the need for protective and interference-minimizing components with the requirement for unobstructed radar signal transmission and reception.

Another aspect of the invention can be realized, when one or more gaps are provided in the second layer adjacent the at least one antenna and the gaps are covering the field of view.

This configuration could significantly enhance the radar system's functionality by carefully balancing the need for wave absorption to reduce interference via the absorber layer with the necessity of unimpeded wave transmission and reception in the antenna's field of view. The gaps in the absorber layer would allow for direct radar wave passage in areas most critical to the system's sensing capabilities, while the surrounding absorber material minimizes potentially disruptive reflections from other parts of the device and/or from a front fascia of a vehicle, behind which the radar device is installed. When manufacturing the gaps, tolerances for manufacturing and positioning of the radome need be taken into account.

Another aspect of the invention is the radar device, wherein the first layer has a relative permittivity in the range 2 to 4, preferably in the range 2.6 to 3.8, even more preferably in the range 3.3 to 3.6.

Selecting a material with a relative permittivity within these specified ranges could significantly enhance the radar device's functionality by ensuring that the radome layer effectively transmits radar waves with minimal reflection and absorption losses, while still having a material that can be manufactured easily and still provided sufficient structurally integrity, e.g., to be used as a radome.

Another aspect of the invention lies in a radar device wherein the first layer has a thickness in the range 1.4 mm to 1.6 mm or in the range 0.3 mm to 0.6 mm or in the range 2.3 mm to 2.7 mm.

The optimal thickness of the first layer can vary significantly, depending on the specific application or performance requirements of the radar device. The exemplarily given thickness ranges each lead to local reflectivity minima in the two-layer structure. A thinner radome layer, within the 0.3 mm to 0.6 mm range, might be preferred for lightweight applications where minimizing the device's overall weight is crucial. Conversely, for applications requiring enhanced durability and protection against harsh environmental conditions, a thicker radome layer, in the range of 2.3 mm to 2.7 mm, might be selected to provide additional structural integrity without significantly compromising radar wave transmission. When aiming for manufacturability, while still maintaining a sufficiently thin layer, the range 1.4 mm to 1.6 mm would be the best choice. Depending on the overall design target, the variation in thickness can also be chosen to generally optimize different aspects of radar wave transmission and protection of the underlying antenna components, balancing factors such as mechanical strength, weight, and electromagnetic properties.

A further aspect of the invention could be realized, when the second layer has a relative permittivity in the range 10 to 15, preferably 12 to 14, even more preferably 13 to 13.5.

The specificity of the relative permittivity ranges for the second layer, e.g. the absorber layer can lead to an improved reflectivity when combined with the first layer. This is in particular the case when the first layer has the above-described properties.

The invention can further be realized, when the second layer has a thickness in the range 0.6 mm to 1.4 mm, preferably in the range 0.8 mm to 1.2 mm, even more preferably in the range 0.9 mm to 1.1 mm.

By fine-tuning the absorber layer's thickness, the configuration can for example address the necessary combination of thickness and relative permittivity of the two layers, when aiming for a reduced reflectivity of the layer stack.

Another aspect of the invention is realized, when the second layer has a transmission damping of at least 15dB, preferably at least 20dB, more preferably at least 25dB.

With a transmission damping of higher than 15 dB, an improved damping is achieved.

Another aspect of the invention is achieved, when one of the layers comprises a positive surface structuring and the respective other layer comprises a corresponding negative surface structuring, the layers being arranged such that the surface structuring face each other, wherein preferably the positive surface structuring comprises elevated half spheres.

This design of interlocked positive and negative surface structuring between the two layers could significantly enhance the radar device's performance by optimizing electromagnetic wave interaction within the radome and also optimizing the adhesion of the two layers. The use of elevated half spheres and corresponding indentations can create a unique interface that may help to minimize internal reflections, absorb specific radar frequencies more efficiently, or improve the overall mechanical stability of the radome.

The invention can be also realized, when the first layer is made of a compound comprising Polybutylenterephthalat (PBT) and/or Poly-carbonat (PC).

The incorporation of PBT and/or PC into the radome's first layer would make the radar device especially suitable for applications in environments, where materials are subjected to rigorous conditions. For instance, in automotive applications, the radar device could be integrated into vehicle systems for adaptive cruise control, collision avoidance, and/or blind-spot detection, with the PBT and/or PC compound providing necessary resilience against road debris, oil, and extreme temperatures. The material's properties would ensure that the radar system remains functional and reliable. Generally, any low loss dielectric material would suitable here.

This embodiment can be further improved when the compound comprises a glass fiber reinforcement in the range 10% to 50%, preferably in the range 20% to 40% and even more preferably in the range 25% to 35%.

Glass fiber reinforcement is a common technique used to enhance the mechanical properties of polymers, including their strength, stiffness, and durability, without significantly increasing the material's weight. Incorporating glass fiber reinforcement within the specified ranges into the PBT compound for the first layer of the radome can significantly improve the radar device's performance and durability. For applications in automotive radar systems, for instance, the enhanced mechanical strength and environmental resistance of the glass fiber reinforced PBT layer can ensure reliable operation under a wide range of conditions, including variations in temperature, humidity, and physical impact. A typical glass fiber reinforced PBT would be comprising about 30% of added glass fibers.

Another aspect of the invention can be achieved, when the two layers are molded onto each other by means of injection molding.

Injection molding is a highly efficient, precise manufacturing process where molten material is injected into a mold to form the desired shape. By using this process to mold the two layers onto each other, a seamless integration of the layers is realized, resulting in a radome that is robust, uniform, and optimized for both physical durability and electromagnetic performance. This manufacturing technique could offer significant advantages in terms of production efficiency, consistency, and the quality of the final product. For instance, in the production of radar devices for automotive safety systems, such as adaptive cruise control or collision avoidance systems, the use of injection molding to fabricate the radome ensures a high degree of precision in the fit and alignment of the two layers. This precision is crucial for maintaining the optimal transmission and absorption of radar waves, directly impacting the system's effectiveness and reliability. Generally, any other manufacturing method can be used to form a connection between the two layers, for example 3D printing, ultrasonic welding, gluing, and/or clipping the layers onto each other.

A further embodiment of the invention is achieved, when a gap is between the second layer and the antenna, when the gap has a thickness in the range of 1.5 mm to 3 mm, preferably in the range of 1.9 mm to 2.8 mm and even more preferably in the range of 2.1 mm to 2.5 mm, wherein the gap is preferably filled with air.

The presence of an e.g., air-filled gap is advantageously as air does not significantly impede the propagation of radar waves, and thus serves as an effective medium for the transmission of these waves without introducing additional signal attenuation or distortion. The thickness of the gap can ensure the necessary distance between the antenna's surface and the absorber layer, thus minimizing the parasitic back reflection onto the antenna's surface, while still enabling the desired field of view for the antenna. The structure of an absorber layer with air between antenna and absorber is blocking parasitic signals on the antenna's surface, as the radar waves are not reflected back onto it.

Another aspect of the invention is a vehicle comprising a radar device, when the vehicle has a fascia (i.e., a front-end component of a car, such as a front bumper or a grille or similar), wherein the radar device is arranged behind the fascia, and the radar device is preferably a front radar configurated and dedicated to be arranged in the front of the vehicle.

Such a front radar configuration in a vehicle implies its primary use in applications such as collision avoidance, adaptive cruise control, pedestrian detection, and other safety and/or navigation functions that require forward-facing sending and sensing capabilities. The inclusion of the described radar device in a vehicle enhances the vehicle's ability to interact with its environment, providing critical data for safety, navigation, and driver assistance systems. Placing the radar device behind the fascia protects the device from environmental elements and potential physical impacts and maintains the vehicle's aesthetic.

### 4. Brief description of the figures

In the following, preferred embodiments of the disclosure are disclosed by reference to the accompanying figures.
- Fig. 1:: illustrates the schematic of a radar device in accordance with the invention.
- Fig. 2:: shows an exemplary radar device in a perspective view.
- Fig. 3:: shows the radar device of Fig. 2 in a close-up view.
- Fig. 4:: illustrates the surface structuring of an absorber layer in a top view.
- Fig. 5:: shows one example of a surface structuring in a side view.
- Fig. 6:: shows the reflection factor of a layer stack as a function of the dielectric constant and the dissipation factor of the second layer.

### 5. Detailed description of the figures

The subsequent sections provide a detailed description of the invention, referencing the accompanying illustrations for clarity. The descriptions represent examples only and are not intended to limit the invention's scope. Identical reference numerals across the figures and text denote the same components. The illustrations may not reflect actual size or scale; their dimensions, proportions, and depictions of elements might be enhanced for better understanding and visual convenience.

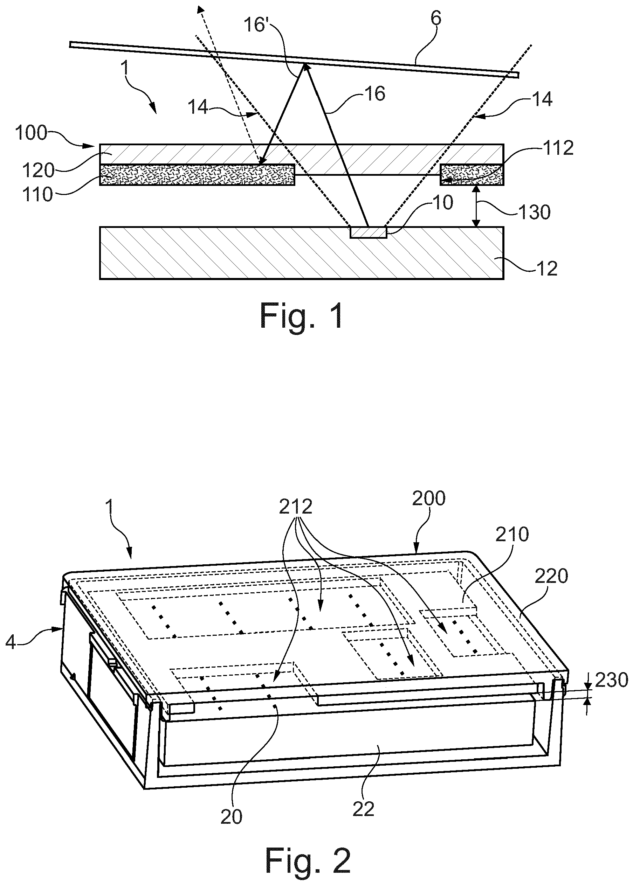

Figure 1 illustrates a radar device 1 according to the invention in a schematic view. An antenna board 12 has a radiating antenna element 10, radiating radar waves 16 in a field of view 14 (indicated by dashed lines). A gap 130 is present between the antenna board and a layer stack of an absorber layer 110 (second layer) and a radome layer 120 (first layer), which stack forms a radome 100. The absorber layer comprises a gap 112, which is arranged over the radiating antenna element 10. As one can take from the figure, the gap is arranged such that the absorber layer 110 is arranged outside the field of view 14 of the antenna element 10. The radar device 1 is covered by a fascia 6 of a vehicle, as e.g., a front bumper.

Such an arrangement yields the advantage, that the radar waves 16 emitted from the radiating antenna element 10 can pass through the gap 112 in the absorber layer. However, possible emitted side radar waves 16' (being e.g., reflected from the fascia 6 as schematically shown in Fig. 1) will be absorbed by the absorber layer 110 and will not be reflected against the highly conductive antenna board 12, thus decreasing parasitic signals on the antenna board. Further, radar waves that are reflected from the surface of the fascia will be let into the layer stack of the radome 100, comprising the radome layer 120 and the absorption layer 110. The radome layer is comprising a material with a lower relative permittivity to let radar waves pass, wherein the absorption layer comprises a higher relative permittivity when compared to each other. Fine-tuning the thickness and the relative permittivity of the two layers in the layer stack creates an antireflection layer, thus decreasing multibounce reflection of the radar waves. This decreases not just the radar cross section, but also the angular error of the radar and prevents ghost targets in the detection mode of the radar device.

Figure 2 shows an exemplary radar device 1 in a perspective view. A housing 4 is enclosing an antenna board 22 with radiating antenna elements 20. A radome 200 is covering the antenna board and comprises a stack of two layers, an absorber layer 210 and a radome layer 220. Between the antenna board 22 and the absorber layer 210 is a gap 230, so that the absorber layer 210 is not directly in contact with the antenna board. In the vicinity of the radiating antenna elements 20, the absorber layer comprises gaps 212, which are covering the field of view of the antenna. The gaps 212 in the absorber layer 210 are arranged asymmetrically offset relative to each other.

Having the gaps 212 in the absorber layer 210 arranged asymmetrically offset relative to each other enables the radar device to utilize multiple-input multiple-output (MIMO) radar operation, thus facilitating an improved estimation of azimuth and elevation angles during operation. With the absorber layer 210 arranged such that a gap 230 is between the absorber layer and the antenna board, reflected radar waves can be absorbed by the absorber layer 210 and are thus not reflected back onto the antenna board 22. This is beneficially to decrease the parasitic signals on the antenna board's surface resulting from radar waves being reflected back to the antenna board, from e.g. a front fascia of a vehicle.

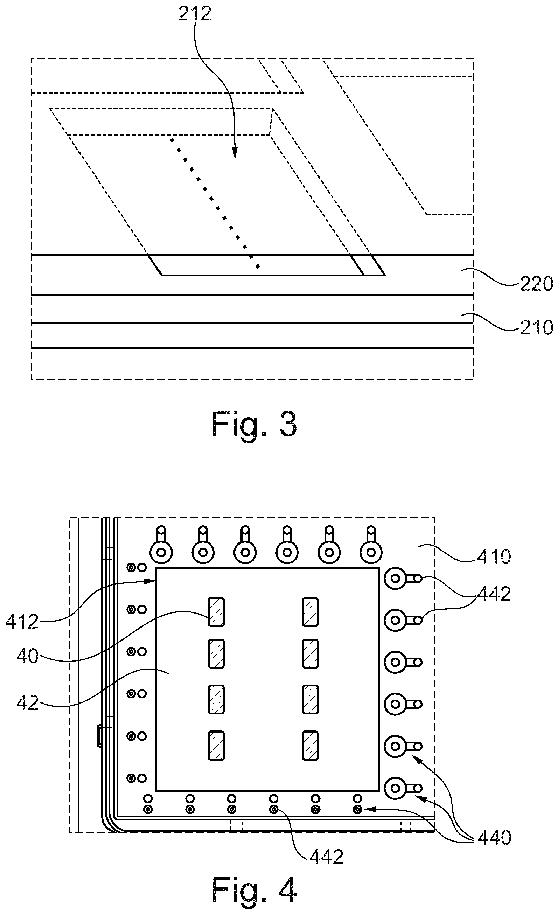

Figure 3 shows a detail of the radar device of Figure 2 in a close-up view. It can be seen, that the radome comprises a radome layer 220 and a absorber layer 210. The radome layer 220 is in direct surface contact with the absorber layer 210. The absorber layer has a gap 212, covering the antenna element, so that the field of view of the antenna is preferably not obstructed by the absorber layer.

In the shown embodiment, the gap 212 has a rectangular shape, which corresponds to the antenna's field of view and which is also beneficial during the manufacturing of the absorber layer, as this shape is easier to produce.

Figure 4 illustrates the surface structuring 440 of an absorber layer 410 in a top view. The surface structuring 440 is arranged on the absorber layer 410 and positioned around the gap 412 in the absorber layer. The gap 412 in the absorber layer covers the antenna board 42 with the radiating antenna elements. Here, the surface structuring 440 comprises half spheres 442 of different sizes.

The surface structuring 440 has the function to fit into a corresponding surface structuring on the radome layer, thus enabling an improved adhesion. The half spheres on the other hand have the advantages, that they not only improve the adhesion between the layers, but also add another element to improve the reflectivity due to their spherical surface.

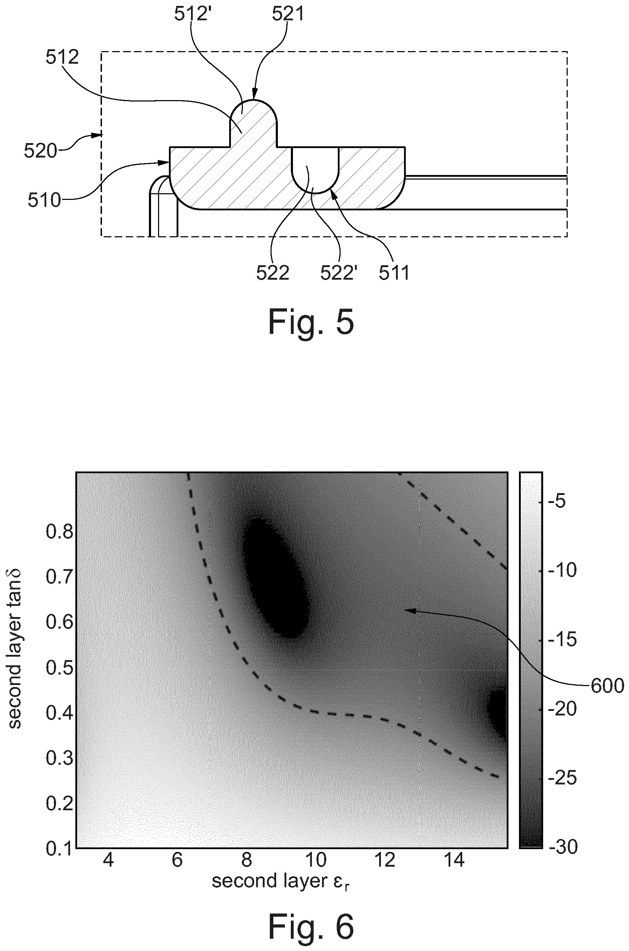

Figure 5 shows one example of a surface structuring. The absorber layer 510 has a negative surface structuring 511 in form of a recess and a positive surface structure 512 in form of a pin-like protrusion. The radome layer 520 has a corresponding positive surface structuring 522 in form of a pin-like protrusion and a corresponding negative surface structure 521 in form of a recess. Both positive and negative surface structures comprise matching half sphere-shapes 522' and 512'. This design simplifies manufacturing, without compromising on an improved adhesion between the absorber and the radome layer.

Figure 6 depicts the simulated reflection factor of a layer stack of the radome and the absorber as a function of the material properties relative permittivity εᵣ and dissipation factor tan δ of the second layer . The target area 600 is the area between the dashed lines and corresponds to a reflection of below -20 dB. The simulation was carried out assuming a first layer with a thickness of 1.51 mm and a relative permittivity of 3.5 and a second layer with a thickness of 1 mm and varying relative permittivity εᵣ and a dissipation factor tan δ.

With this relationship, the layer stack materials can be optimized to meet various optimization targets, e.g. with regard to material cost or the desired reflection properties.

### Reference list:

1: radar device
4: housing
6: fascia
10, 20, 40: radiating antenna element
12, 22, 42: antenna board
14: field of view
16,16': radar wave
100, 200: radome
110, 210, 410, 510: absorber layer
112, 212, 412: gap in absorber layer
120, 220, 520: radome layer
130, 230: gap between antenna and absorber
440: surface structuring
512, 522: positive surface structuring
511, 521: negative surface structuring
442, 512', 522': half spheres
600: target area

## Claims

1. A radar device (1) comprising:
at least one antenna having a field of view (14);
a radome (100, 200), covering the at least one antenna, wherein
the radome (100, 200) comprises a first layer and a second layer in form of a layer stack, configured to have a low reflection for radar waves (16).

2. The radar device (1) according to claim 1, wherein the first layer forms a radome layer (120, 220, 520) and the second layer forms an absorber layer (110, 210, 410, 510) from a material with a higher radar wave (16) absorption capacity than the material of the first layer, wherein the absorber layer (110, 210, 410, 510) is arranged between the radome layer (120, 220, 520) and the at least one antenna.

3. The radar device (1) according to claim 1 or 2, wherein the second layer is arranged outside of the field of view (14) of the at least one antenna.

4. The radar device (1) according to any of the preceding claims, wherein one or more gaps (112, 212, 412) are provided in the second layer adjacent the at least one antenna, the gaps (112, 212, 412) covering the field of view (14).

5. The radar device (1) according to any of the preceding claims, wherein the first layer has a relative permittivity in the range 2 to 4, preferably in the range 2.6 to 3.8, even more preferably in the range 3.3 to 3.6.

6. The radar device (1) according to any of the preceding claims, wherein the first layer has a thickness in the range 1.4 mm to 1.6 mm or in the range 0.3 mm to 0.6 mm or in the range 2.3 mm to 2.7 mm.

7. The radar device (1) according to any of the preceding claims, wherein the second layer has a relative permittivity in the range 10 to 15, preferably 12 to 14, even more preferably 13 to 13.5.

8. The radar device (1) according to any of the preceding claims, wherein the second layer has a thickness in the range 0.6 mm to 1.4 mm, preferably in the range 0.8 mm to 1.2 mm, even more preferably in the range 0.9 mm to 1.1 mm.

9. The radar device (1) according to any of the preceding claims, wherein the second layer has a transmission damping of at least 15dB, preferably at least 20dB, more preferably at least 25dB.

10. The radar device (1) according to any of the preceding claims, wherein one of the layers comprises a positive surface structuring (512, 522) and the respective other layer comprises a corresponding negative surface structuring (511, 521), the layers being arranged such that the surface structuring face each other, wherein preferably the positive surface structuring (512, 522) comprises elevated half spheres (442, 512', 522').

11. The radar device (1) according to any of the preceding claims, wherein the first layer is made of a compound comprising Polybutylenterephthalat (PBT) and/or Polycarbonat (PC).

12. The radar device (1) according to claim 11, wherein the compound comprises a glass fiber reinforcement in the range 10% to 50%, preferably in the range 20% to 40% and even more preferably in the range 25% to 35%.

13. The radar device (1) according to any of the preceding claims, wherein the two layers are molded onto each other by means of injection molding.

14. The radar device (1) according to any of the preceding claims, wherein between the second layer and the antenna is a gap (130, 230) with a thickness in the range of 1.5 mm to 3 mm, preferably in the range of 1.9 mm to 2.8 mm and even more preferably in the range of 2.1 mm to 2.5 mm, wherein the gap (130, 230) is preferably filled with air.

15. A vehicle comprising a radar device (1) according to any of the preceding claims having a fascia (6), wherein the radar device (1) is arranged behind the fascia 6), and the radar device (1) is preferably a front radar configurated and dedicated to be arranged in the front of the vehicle.
